# EUROPÄISCHE PATENTSCHRIFT

(11) **EP 2 287 023 B1**
(45) Veröffentlichungstag und Bekanntmachung des Hinweises auf die Patenterteilung: **13.02.2013**
(21) Anmeldenummer: 10006650.5
(22) Anmeldetag: 26.06.2010
(51) Int. Cl.: B60G 7/00, B60G 21/055, B60G 21/05

(54) **Kraftfahrzeug-Achskomponente und Verfahren zur Herstellung einer Kraftfahrzeug-Achskomponente**
Motor vehicle axle components and method for their manufacture
Composant d'axe pour véhicule automobile et procédé de fabrication d'un composant d'axe pour véhicule automobile

(30) Priorität: 19.08.2009 DE 102009037905
(43) Veröffentlichungstag der Anmeldung: 23.02.2011
(73) Patentinhaber: Benteler Automobiltechnik GmbH, 33102 Paderborn (DE)
(72) Erfinder: Wibbeke, Michael, Dr.-Ing., 33102 Paderborn (DE); Krogmeier, Jürgen, 33161 Hövelhof (DE)
(74) Vertreter: Ksoll, Peter

(56) Entgegenhaltungen:
- EP-A1- 0 712 741
- EP-A2- 1 036 680
- EP-A2- 2 078 870
- WO-A1-2006/042988
- DE-A1- 3 920 793
- DE-A1- 19 542 523
- DE-A1- 19 841 805
- US-A- 5 836 712

## Beschreibung

Die Erfindung betrifft eine Kraftfahrzeug-Achskomponente, welche einen Leichtmetallkörper und einen Rohrkörper umfasst, die miteinander klebetechnisch verbunden sind, wobei zwischen einem Ende des Rohrkörpers und einer zylindrischen Aufnahme des Leichtmetallkörpers eine Klebstofftasche ausgebildet ist, die mit Klebstoff befüllt ist, sowie ein Verfahren zur Herstellung einer solchen Kraftfahrzeug-Achskomponente.

Eine gattungsgemäße Kraftfahrzeug-Achskomponente in Form einer Verbundlenkerachse zählt durch die EP 1 036 680 B1 zum Stand der Technik. Eine solche Verbundlenkerachse ist innovativ im Hinblick auf einen angestrebten Leichtbau im Bereich von Kraftfahrzeug-Achskomponenten und verspricht hohes Entwicklungspotential.

Die DE 203 09 455 U1 beschreibt eine Verbundlenkerachse für eine hintere Radaufhängung eines Kraftfahrzeugs, bei der der Querträger sowie die vorderen und hinteren Lenkerhälften über separate Verbindungselemente gekoppelt sind. Die Fügung der Bauteile und der Verbindungselemente kann durch Schweißen oder Kleben ausgeführt werden.

Zum Stand der Technik zählt ferner die DE 195 20 520 A1, die einen Lenker aus Rohrmaterial beschreibt. An einem freien Ende des Lenkers ist ein Trägerelement befestigt. Hierzu ist an Trägerelement ein axialer Fortsatz ausgebildet, mit dem das Trägerelement in eine Aufnahmeöffnung des Lenkers eingeführt und entweder lösbar oder unlösbar mit dem freien Ende des Lenkers verbunden ist. Zur Herstellung einer unlösbaren Verbindung soll der axiale Fortsatz in den Lenker eingeklebt oder mit dem Lenker verschweißt sein.

DE 195 42 523 A1, DE 198 41 005 zeigen weitere Kraftfahrzeug-Achskomponenten mit einer Klebeverbindung.

Die Fügezonen von Achskomponenten unterliegen im Betrieb hohen statischen und dynamischen Belastungen. Dies gilt insbesondere für die Fügezonen von Achskomponenten, deren Bauteile aus unterschiedlichen Werkstoffen bestehen.

Der Erfindung liegt ausgehend vom Stand der Technik die Aufgabe zugrunde, eine gattungsgemäße Kraftfahrzeug-Achskomponente hinsichtlich Belastungsverhalten und Lebensdauererwartung zu verbessern sowie ein Verfahren zu Herstellung einer solchen Kraftfahrzeug-Achskomponente aufzuzeigen.

Die Lösung des gegenständlichen Teils der Aufgabe besteht in einer Kraftfahrzeug-Achskomponente mit den Merkmalen von Anspruch 1.

Danach ist vorgesehen, dass am freien Ende der Aufnahme des Leichtmetallkörpers eine Fase vorgesehen ist und der Raum zwischen der Fase und der benachbarten Wand des Rohrkörpers mit Klebstoff befüllt ist. Des Weiteren ist auch am freien Ende des Rohrkörpers eine Fase vorgesehen, wobei auch der Raum zwischen der Fase am Ende des Rohrkörpers und einer benachbarten Wand des Leichtmetallkörpers mit Klebstoff befüllt ist.

Durch die erfindungsgemäße Ausgestaltung der Fügezone und der gezielten Abdichtung der inneren und äußeren Übergangsbereiche der Fügezone durch Klebstoff wird die Fügezone vor Korrosion geschützt. Hierdurch wird das Belastungsverhalten der Kraftfahrzeug-Achskomponente verbessert und die Lebensdauer erhöht. Insbesondere bei ungleichen metallischen Werkstoffpaarungen, also der Verbindung zwischen einem Leichtmetallkörper und einem Rohrkörper aus Stahl, kann eine Kontaktkorrosion vermieden werden, indem der Kontaktbereich zwischen Leichtmetall und Stahl durch den Klebstoff versiegelt wird.

Als Klebstoff können Ein- oder Zwei-Komponenten-Klebstoffe zum Einsatz gelangen, insbesondere Epoxidharz-Klebstoffe. Der Klebstoff kann wärmehärtend oder kalthärtend sein.

Vorteilhafte Ausgestaltungen und Weiterbildungen der erfindungsgemäßen Kraftfahrzeug-Achskomponente sind Gegenstand der abhängigen Ansprüche 2 bis 13.

Die erfindungsgemäße geometrische Ausgestaltung sieht eine Fase sowohl am freien Ende der Aufnahme als auch am freien Ende des Rohrkörpers vor. Die Fase kann durch eine abgeschrägte Fläche gebildet sein, die geradlinig und/oder gekrümmt verläuft.

Je nach Ausgestaltung der Kraftfahrzeug-Achskomponente ist die Fase am Innenumfang des freien Endes des Rohrkörpers vorgesehen. Des Weiteren kann die Fase am Außenumfang des freien Endes des Rohrkörpers angeordnet sein.

Gleichfalls kann die Fase am freien Ende der Aufnahme am Außenumfang der Aufnahme oder am Innenumfang der Aufnahme vorgesehen sein.

Vorzugsweise verläuft die Fase am freien Ende des Rohrkörpers zur Stirnfläche des Rohrkörpers in einem Winkel zwischen 30° und 60°.

Die Fase am freien Ende der Aufnahme verläuft in einem Winkel zwischen 20° und 60° bezogen auf die Stirnfläche der Aufnahme.

Bei dem Leichtmetallbauteil, beispielsweise einem Längslenker, handelt es sich vorzugsweise um ein Gussteil. Insbesondere besteht der Leichtmetallkörper aus Aluminium, einer Aluminiumlegierung oder aus Magnesium bzw. einer Magnesiumlegierung.

Das Rohrbauteil besteht vorzugsweise aus Stahl. Insbesondere kommt ein Stahlrohr als Rohrbauteil zum Einsatz. Möglich ist auch ein Rohrbauteil, welches zumindest partiell faserverstärkt ist, beispielsweise durch Kohlenstofffasern. Das Rohrbauteil kann auch aus einem faserverstärkten Kunststoff bzw. einem Faser-Kunststoff-Verbund (FKV) bestehen. Das Rohrbauteil kann unbeschichtet oder beschichtet, beispielsweise mit einer kathodischen Tauchlackierung versehen sein.

Die Erfindung ermöglicht eine klebetechnische Verbindung zwischen dem Rohrkörper und dem Leichtmetallkörper, die aus unterschiedlichen Werkstoffen bestehen. Hierbei wird durch die geometrische Ausgestaltung der Fügezone ein Längspresssitz erreicht, der einen optimierten Korrosionsschutz in der Übergangszone aufweist.

Die Verbindungsstelle ist bevorzugt rund oder oval ausgeführt. Die Aufnahme am Leichtmetallkörper ist insbesondere als Zapfen ausgeführt, der das freie Ende des Rohrkörpers aufnimmt. Hierbei kann der Zapfen in das Ende des Rohrkörpers eingeführt sein oder das freie Ende des Rohrkörpers außen umschließen.

Die Bearbeitung des Leichtmetallkörpers und des Rohrkörpers zur Herstellung der Fasen und auch der Klebstofftasche erfolgt bevorzugt spanend bzw. spanabhebend. Hierbei ist die Klebstofftasche vorzugsweise durch eine umlaufende Ringnut in der Aufnahme gebildet. Die Tiefe der Klebstofftasche kann zwischen 0,2 mm bis 1,0 mm betragen, vorzugsweise hat sie eine Tiefe von 0,5 mm.

Die Fügeflächen des Leichtmetallkörpers sind vor der Fügung einer Oberflächenbehandlung unterzogen worden, insbesondere einer Passivierung. Dies trägt ebenfalls zum Korrosionsschutz bei und erhöht die Dauerfestigkeit der Klebeverbindung. Die Passivierung erfolgt durch Auftrag einer geeigneten Passivierungslösung. Hierbei entsteht eine Konversionsschicht (Passivschicht), die aus Oxiden der Passivierungslösung und des Grundwerkstoffs besteht. Die Passivschicht wird gleichmäßig und konturtreu auf der Fügefläche am Leichtmetallkörper erzeugt. Die Schichtdicke der Passivschicht liegt unterhalb von 1 µm.

Die Oberflächenvorbehandlung kann auch mittels Plasmatechnologie erfolgen, insbesondere durch eine Atmosphärendruck-Plasmavorbehandlung. Durch die Aktivierung wird die Haftung des Klebstoffs im Bereich der späteren Fügezone deutlich erhöht.

Die Lösung des verfahrensmäßigen Teils der Aufgabe besteht in einem Verfahren zur Herstellung einer Kraftfahrzeug-Achskomponente gemäß Anspruch 14.

Das erfindungsgemäße Verfahren umfasst die folgenden Maßnahmen:
- Bereitstellen eines Rohrkörpers und Herstellen einer Fase an einem freien Ende des Rohrkörpers;
- Bereitstellen eines Leichtmetallkörpers mit einer zylindrischen Aufnahme und Herstellen einer Fase an einem freien Ende der Aufnahme;
- Aufnehmen des Leichtmetallkörpers in einer Bearbeitungsstation;
- Zuführen des Rohrkörpers in die Bearbeitungsstation;
- Applizieren von Klebstoff auf die Aufnahme und/oder das Ende des Rohrkörpers;
- Zusammenführen der Aufnahme und des Endes des Rohrkörpers in der Bearbeitungsstation;
- Entnahme der Kraftfahrzeug-Achskomponente aus der Bearbeitungsstation.

Das erfindungsgemäße Verfahren ist rationell und ermöglicht eine ökonomische Herstellung von qualitativ hochwertigen Kraftfahrzeug-Achskomponenten, deren Bauteile aus zumindest zwei unterschiedlichen Werkstoffen bestehen und die miteinander klebetechnisch gefügt sind.

Die abhängigen Ansprüche 15 bis 22 betreffen vorteilhafte Ausgestaltungen des erfindungsgemäßen Verfahrens.

Der Klebstoffauftrag auf die Aufnahme und/oder das Ende des Rohrkörpers erfolgt vollautomatisch in der Bearbeitungsstation. Hierzu weist die Bearbeitungsstation zumindest eine Klebstoffauftragsvorrichtung auf, die entlang einer Traverse der Bearbeitungsstation verfahrbar ist und so beide Seiten der Bearbeitungsstation bedienen kann. Die Bearbeitungsstation kann auch an jeder Seite eine Klebstoffauftragsvorrichtung besitzen, so dass ein Verfahren der Klebstoffauftragsvorrichtung nicht notwendig ist. Dies hat insbesondere hinsichtlich der Taktzeit, aber auch der Wartung u. ä. Vorteile.

Wie bereits erläutert, wird zur Steigerung der Haftung des Klebstoffs zumindest die Fügefläche des Leichtmetallkörpers vor dem Klebstoffauftrag einer Oberflächenvorbehandlung unterzogen, vorzugsweise einer Passivierung bzw. Aktivierung mittels einer Passivierungslösung, einem Beizvorgang oder einer Plasmabehandlung.

Bevor das Ende des Rohrkörpers in bzw. auf die Aufnahme des Leichtmetallkörpers gepresst wird, kann eine Kalibrierung des Rohrinnendurchmessers erfolgen.

Die Aufnahme ist als vom Leichtmetallkörper abstehender Zapfen ausgestaltet. Vorzugsweise wird der Leichtmetallkörper beim Applizieren bzw. Auftragen des Klebstoffs rotierend bewegt. Hierbei wird Klebstoff in dem Bereich der Fügezone der Aufnahme aufgetragen.

Nach dem Klebstoffauftrag werden die Aufnahme und das Ende des Rohrkörpers in einer Bearbeitungsstation zusammengeführt. Insbesondere wird das Ende des Rohrkörpers auf bzw. in die Aufnahme gepresst. Hierbei entsteht ein Längspresssitz. Überschüssiger Klebstoff wird nach dem Zusammenführen der Aufnahme und des Endes des Rohrkörpers gezielt entfernt.

Insbesondere wird die Klebstofftasche mit Klebstoff befüllt, und zwar in einer solchen Menge, dass ein Teil des Klebstoffs beim Ineinanderschieben bzw. - pressen der Aufnahme und des Endes des Rohrbauteils bis in die Endlage der Bauteile geschoben wird und hier seine Klebe- und Dichtfunktion erfüllt, indem der Raum zwischen der Fase an der Aufnahme und der benachbarten Wand des Rohrkörpers sowie der Raum zwischen der Fase am freien Ende des Rohrkörpers und der benachbarten Wand des Leichtmetallkörpers mit Klebstoff befüllt wird.

Vorzugsweise wird das Ende des Rohrkörpers in der Aufnahme auf Block gefahren, d. h. der Rohrkörper wird bis zu einer stirnseitigen Anlage in bzw. an den Leichtmetallkörper geschoben. Durch den erfindungsgemäßen Auftrag des Klebstoffs und der zur Verfügung stehenden Klebstoffmenge ist es aber auch möglich, das Rohrbauteil weggesteuert aufzupressen, so dass eine nicht vollständige Anlage der Stirnfläche des Rohrkörpers an einer frontal gegenüberliegenden Fläche des Leichtmetallkörpers möglich ist. Hierdurch entstehen keine Einbußen hinsichtlich Korrosion oder Undichtigkeiten im Übergangsbereich zwischen dem Rohrkörper und dem Leichtmetallkörper.

Die Aushärtung des Klebstoffs kann zum Beispiel mit Hilfe der Induktionsschnellhärtung in der Bearbeitungsstation erfolgen bevor die Kraftfahrzeug-Achskomponente aus der Bearbeitungsstation entfernt wird. Rationell kann die Aushärtung des Klebstoffs auch nach Entnahme der Kraftfahrzeug-Achskomponente aus der Bearbeitungsstation erfolgen. Dies kann insbesondere im Zuge eines Oberflächenbeschichtungsvorgangs der Kraftfahrzeug-Achskomponente erfolgen, beispielsweise während einer kathodischen Tauchlackierung.

Die Erfindung ist nachfolgend anhand von Zeichnungen näher beschrieben. Es zeigen:
- Figur 1: in einer Draufsicht eine erfindungsgemäße Kraftfahrzeug- Achskomponente in Form einer Verbundlenker- bzw. Koppel- lenkerachse;
- Figur 2: in einem Vertikalschnitt das freie Ende eines Rohrkörpers;
- Figuren 3 bis 5: ebenfalls im Vertikalschnitt drei weitere Ausführungsvarianten des Endes eines Rohrkörpers;
- Figur 6: einen Ausschnitt aus einem Leichtmetallkörper mit der Darstellung der Aufnahme des Leichtmetallkörpers;
- Figur 7: ein Detail der Darstellung von Figur 6;
- Figur 8: den Fügebereich zwischen dem Leichtmetallkörper und dem Ende des Rohrkörpers;
- Figur 9: technisch vereinfacht eine Anlage zur Herstellung einer Kraftfahrzeug-Achskomponente;
- Figur 10: ein Ablaufschema bei der Herstellung einer Kraftfahrzeug- Achskomponente und
- Figur 11: die Aufnahme des Leichtmetallkörpers gemäß der Darstellung von Figur 6 während des Klebstoffauftrags analog zur Darstellung in Figur 9.

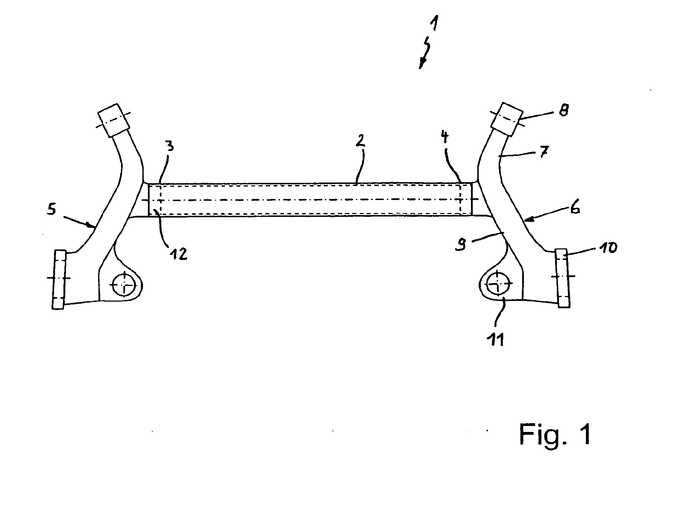

Figur 1 zeigt eine erfindungsgemäße Kraftfahrzeug-Achskomponente in Form einer Verbundlenker- bzw. Koppellenkerachse 1.

Die Koppellenkerachse 1 weist einen als Torsionsprofil wirkenden, aus Stahl bestehenden Rohrkörper 2 auf, an dessen beiden Enden 3, 4 jeweils ein Leichtmetallkörper 5, 6 klebetechnisch gefügt ist. Die Leichtmetallkörper 5, 6 bestehen aus Leichtmetallguss, insbesondere Aluminium- oder Magnesiumguss und bilden die radführenden Längslenker der Koppellenkerachse 1. Das Rohrbauteil 2 kann auch faserverstärkt sein, beispielsweise durch Kohlenstofffasern, oder aus einem Faser-Kunststoff-Verbund bestehen.

Die Leichtmetallkörper 5, 6 bzw. die Längslenker weisen ein gekrümmtes Längsprofil auf, an dessen vorderen Längenabschnitt 7 eine Lagerbuchse 8 zur Montage eines Silentlagers vorgesehen ist und an dessen hinteren Längenabschnitt 9 ein Radträger 10 und eine Federbeinabstützung 11 angeordnet ist.

Im Übergangsbereich zwischen dem vorderen und hinteren Längenabschnitt 7, 9 ist an jedem Leichtmetallkörper 5, 6 einstückig eine zylindrische Aufnahme 12 in Form eines Zapfens angeformt.

Die Verbindung zwischen dem Rohrkörper 2 und den Leichtmetallkörpern 5, 6 erfolgt über die Aufnahmen 12, auf welche jeweils ein Ende 3, 4 des Rohrkörpers 2 gesteckt und klebetechnisch gefügt werden. Als Klebstoff K kommt ein Ein- oder Zwei-Komponenten-Kleber zur Anwendung, insbesondere ein Epoxidharz-Klebstoff.

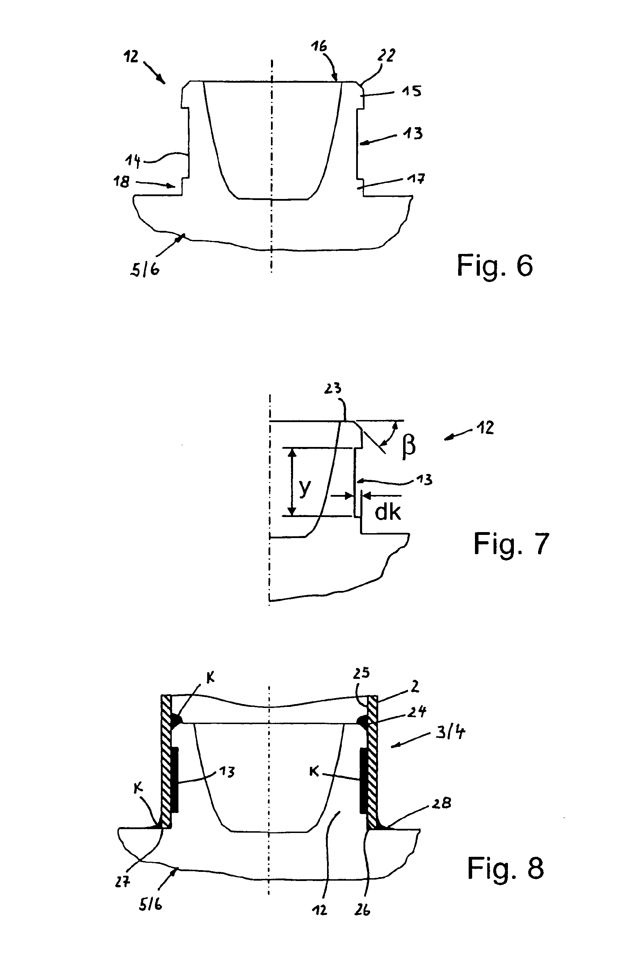

Anhand der Figuren 6 bis 8 wird deutlich, dass an der Aufnahme 12 eine Klebstofftasche 13 vorgesehen ist, die mit Klebstoff K befüllt wird. Die Klebstofftasche 13 ist als umlaufende Nut 14 am Außenumfang der Aufnahme 12 ausgebildet. Die Tiefe dk der Klebstofftasche 13 kann zwischen 0,2 mm und 1 mm liegen. Vorzugsweise hat die Klebstofftasche 13 eine Tiefe von 0,5 mm. Die axiale Länge y der Klebstofftasche 13 wird in Anpassung an die Art und Größe der Belastung im Verbindungsbereich ausgelegt. Begrenzt ist die Klebstofftasche 13 durch einen Absatz 15 am freien Ende 16 der Aufnahme 12 und einen Absatz 17 am innenliegenden Ende 18 der Aufnahme 12.

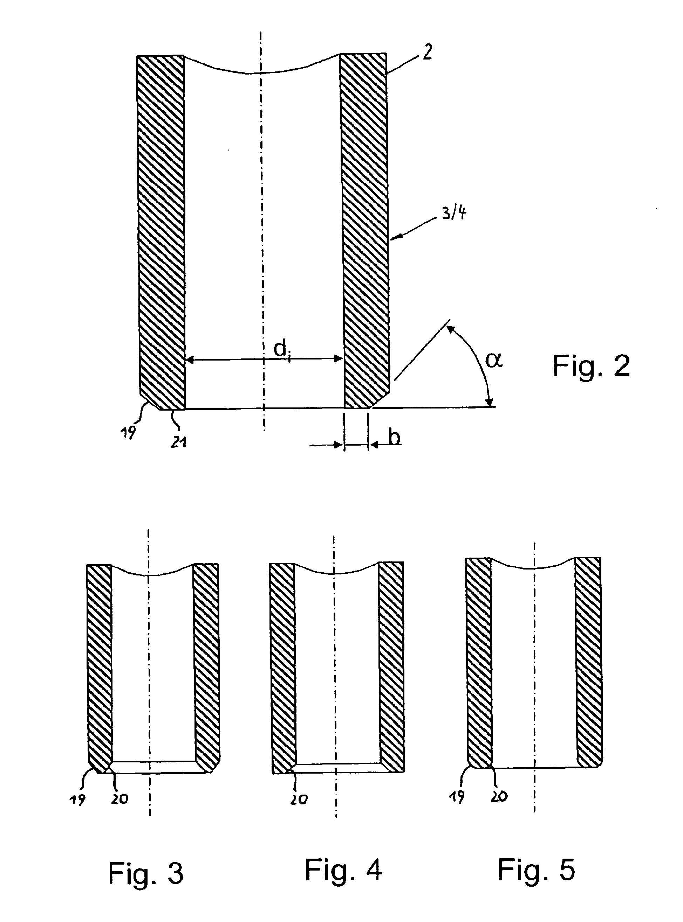

Die Figuren 2 bis 5 zeigen vier verschiedene Ausführungsvarianten eines freien Endes 3 bzw. 4 des Rohrkörpers 2. Allen Ausführungsformen gemein ist, dass am freien Ende 3 bzw. 4 des Rohrkörpers 2 eine Fase 19, 20 vorgesehen ist.

Bei der Ausgestaltung des Endes 3 bzw. 4 gemäß der Figur 2 ist die Fase 19 am Außenumfang des Rohrkörpers 2 vorgesehen. Die Fase 19 wird durch eine abgeschrägte umlaufende Fläche gebildet und nimmt zur Stirnfläche 21 des Rohrkörpers 2 einen Winkel α zwischen 30° und 60° ein. Die Breite der Stirnfläche 21 ist mit b bezeichnet. In der Praxis ist von einer Breite b zwischen 0,5 mm und 1,0 mm auszugehen. In der Figur 2 ist des Weiteren noch mit dᵢ der Innendurchmesser des Rohrbauteils 2 bezeichnet.

Bei dem in der Figur 3 dargestellten freien Ende 3, 4 des Rohrkörpers 2 ist sowohl im Innenumfang des Rohrkörpers 2 als auch am Außenumfang des Rohrkörpers 2 eine Fase 19, 20 in Form einer abgeschrägten Fläche angeordnet.

Das Ende 3, 4 des Rohrkörpers 2 gemäß der Figur 4 weist am Innenumfang eine Fase 20 auf.

Das freie Ende 3 bzw. 4, wie in der Figur 5 ersichtlich, besitzt am Innenumfang und am Außenumfang eine Fase 19, 20 die jeweils durch eine gekrümmt verlaufende Fläche ausgebildet ist.

Anhand der Figuren 6 und 7 erkennt man, dass auch am freien Ende 16 der Aufnahme 12 eine Fase 22 ausgestaltet ist. Im hier dargestellten Ausführungsbeispiel ist die Fase 22 durch eine abgeschrägte Fläche am Außenumfang des freien Endes 16 der Aufnahme 12 ausgestaltet. Mit β ist der Winkel der Fase 22 zur Stirnfläche 23 der Aufnahme 12 bezeichnet. Der Winkel β liegt zwischen 20° und 60°, vorzugsweise bei ca. 30°.

Sowohl die Fasen 19, 20 an den freien Enden 3 bzw. 4 des Rohrbauteils 2 als auch die Fase 22 sowie die Klebstofftasche 13 an der Aufnahme 12 sind durch spanende Bearbeitung der entsprechenden Vor- bzw. Zwischenbauteile hergestellt worden.

Die Figur 8 zeigt den Verbindungsbereich zwischen dem Rohrbauteil 2 und dem Leichtmetallkörper 5, 6. Das Rohrbauteil 2 ist mit seinem freien Ende 3, 4 auf die Aufnahme 12 gepresst und mittels Klebstoff K gefügt. Man erkennt, dass die Klebstofftasche 13 vollständig mit Klebstoff K befüllt ist. Des Weiteren ist der Raum 24 zwischen der Fase 22 am freien Ende 16 der Aufnahme 12 und der benachbarten Wand 25 des Rohrkörpers 2 mit Klebstoff K befüllt. Ebenso ist der Raum 26 zwischen der Fase 19, 20 am freien Ende 3, 4 des Rohrkörpers 2 und der benachbarten Wand 27 des Leichtmetallkörpers 5, 6 mit Klebstoff K befüllt. Hierdurch wird eine Fügung zwischen den Enden 3, 4 des Rohrkörpers 2 und den Aufnahmen 12 der Leichtmetallkörper 5, 6 erreicht. Anhand der Figur 8 wird weiterhin deutlich, dass Klebstoff K auch in dem Zwickel 28 zwischen dem Außenumfang des Endes 3, 4 des Rohrkörpers 2 und dem Leichtmetallkörper 5, 6 vorgesehen ist. Insgesamt werden die inneren und äußeren Übergangsbereiche der Fügezone durch den Klebstoff K abgedichtet und vor Korrosion geschützt. Dies ist insbesondere vor dem Hintergrund der unterschiedlichen Werkstoffe von hoher Wichtigkeit.

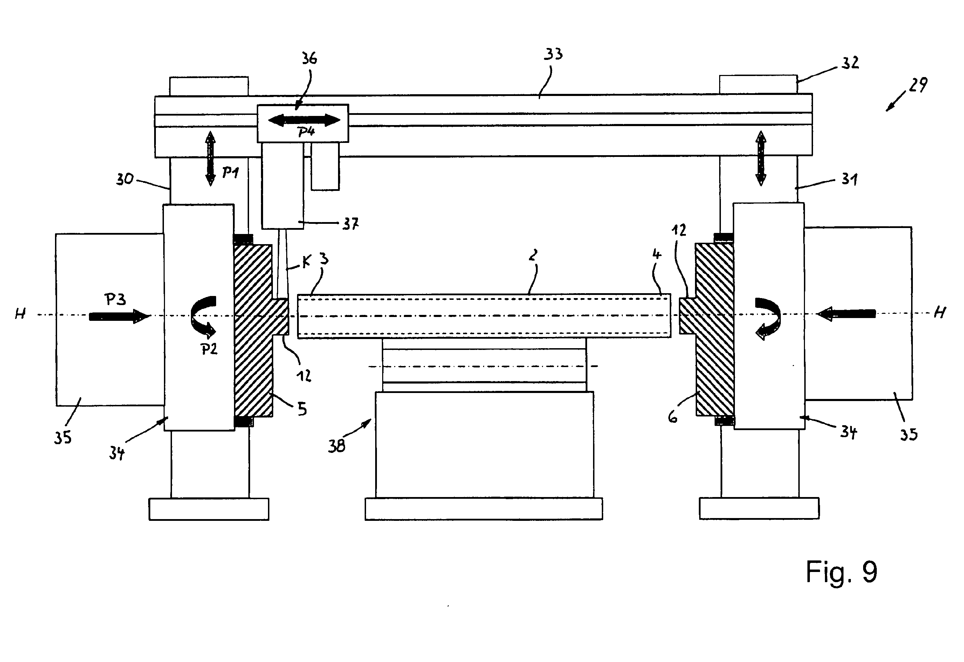

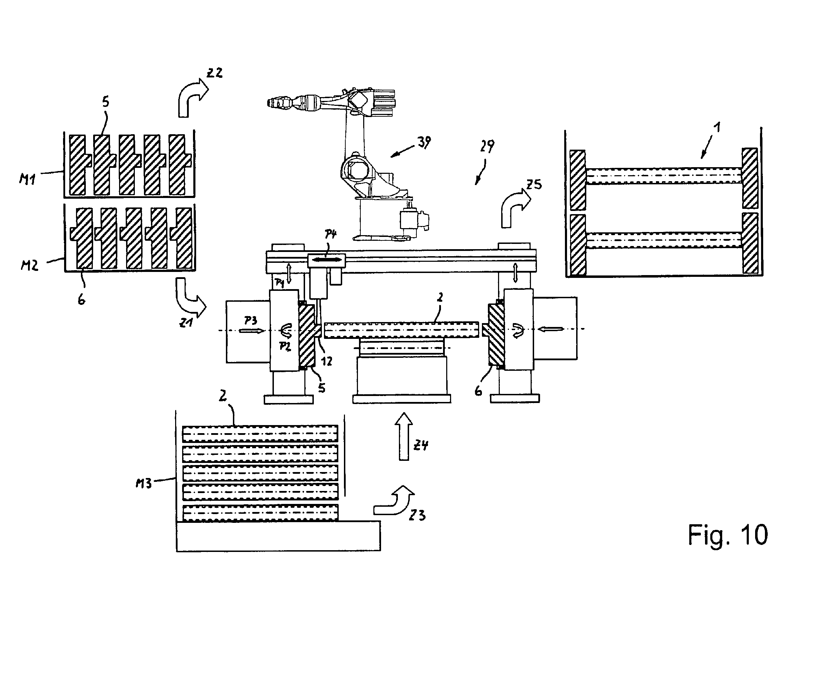

Die Figuren 9 und 10 zeigen das Anlagenkonzept einer Bearbeitungsstation 29 und das Ablaufschema bei der Herstellung einer Kraftfahrzeug-Achskomponente 1.

Die Bearbeitungsstation 29, wie in den Figuren 9 und 10 ersichtlich, umfasst im Wesentlichen zwei seitliche Tragsäulen 30, 31, zwischen deren oberen Enden 32 sich eine höhenverlagerbare (Pfeil P1) Traverse 33 erstreckt. An jeder Tragsäule 30, 31 ist eine Spanneinheit 34 zur Aufnahme eines Leichtmetallkörpers 5, 6 vorgesehen. Die Spanneinheit 34 ist rotierbar gelagert gemäß dem Pfeil P2 und mittels Druckeinheiten 35 axial gemäß dem Pfeil P3 verlagerbar und umgekehrt.

An der Traverse 33 ist eine Klebstoffauftragsvorrichtung 36 mit einer Düse 37 längs verlagerbar angeordnet. Die Verlagerbarkeit ist durch den Pfeil P4 verdeutlicht. Grundsätzlich kann selbstverständlich an jeder Seite der Bearbeitungsstation 29 eine Klebstoffauftragsvorrichtung 36 vorgesehen sein. Eine Verlagerung der Klebstoffauftragsvorrichtung 36 ist dann nicht erforderlich. Dies hat insbesondere hinsichtlich der Taktzeit Vorteile.

Man erkennt des Weiteren eine Fördereinrichtung 38 für die Zuführung der Rohrkörper 2. Bei der Fördereinrichtung 38 handelt es sich vorzugsweise um einen Rollenförderer.

Zur Herstellung einer Kraftfahrzeug-Achskomponente 1 werden Leichtmetallkörper 5, 6 bereitgestellt. In der Figur 10 sind mit M1 und M2 die Magazine mit den vorbereiteten Leichtmetallkörpern 5, 6 bezeichnet. Die Leichtmetallkörper 5, 6 besitzen eine hohlzylindrische Ausnahme 12, an deren freien Ende 16 eine Fase 22 entsprechend der Darstellung in den Figuren 6 bis 8 spanend hergestellt ist. Weiterhin besitzen die Leichtmetallkörper 5, 6 eine Klebstofftasche 13, wie ebenfalls anhand der Figuren 6 bis 8 zu erkennen.

Rohrkörper 2 werden in einem Magazin M3 bevorratet. Die Rohrkörper 2 bestehen aus Stahl und können unbeschichtet oder beschichtet sein. Die freien Enden 3, 4 der Rohrkörper 2 sind spanend bearbeitet und mit einer Fase 19, 20 versehen, wie anhand der Figuren 2 bis 5 erläutert.

Die Leichtmetallkörper 5, 6 werden durch einen Roboter 39 aufgenommen und jeweils links und rechts in den Spanneinheiten 34 positioniert. Dieser Vorgang ist durch die Pfeile Z1 und Z2 verdeutlicht. In den Spanneinheiten 34 positioniert wird Klebstoff K auf die Aufnahmen 12 appliziert. Diese erfolgt über die Klebstoffauftragsvorrichtung 36. In dem hier dargestellten Ausführungsbeispiel erfolgt zunächst ein Klebstoffauftrag an einem Leichtmetallkörper 5, wie in der linken Bildhälfte der Figur 9 ebenso wie in der Figur 10 ersichtlich. Anschließend wird die Klebstoffauftragsvorrichtung 36 entlang der Traverse 33 in Bildrichtung nach rechts verlagert und Klebstoff K auf die Aufnahme 12 des zweiten Leichtmetallkörpers 6 aufgetragen. Während des Klebstoffauftrags werden die Leichtmetallkörper 5, 6 mittels der Spanneinheit 34 um die Achse H rotierend bewegt, so dass ein gleichmäßiger, auf dem Umfang der Klebstofftasche 13 verteilter Klebstoffauftrag erfolgt.

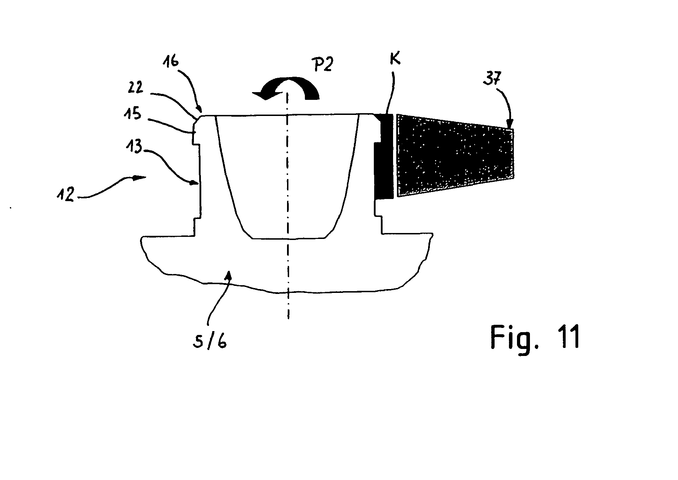

Zur ergänzenden Erläuterung des Klebstoffauftrags wird auf Figur 11 verwiesen. Die Figur 11 zeigt den Leichtmetallkörper 5, 6 während des Auftrags von Klebstoff K, bei dem die Leichtmetallkörper 5, 6 rotierend bewegt werden. Die Rotation ist duch den Pfeil P2 verdeutlicht. Der Klebstoff K wird mittels einer Flachdüse 37 als Flachraupe auf die Aufnahme 12 aufgetragen und hierbei das freie Ende 16 mit der Fase 22, dem Absatz 15 und einem Teil der Klebstofftasche 13 mit Klebstoff K bedeckt. Die Menge an Klebstoff K ist so bemessen, dass sich der Klebstoff K beim Aufpressen eines Endes 3, 4 des Rohrbauteils 2 auf die Aufnahme 12 verteilt, die Klebstofftasche 13 ausfüllt sowie den Raum 24 und den Raum 26 sowie den Zwickel 28, wie in Figur 8 dargestellt, abdichtet.

Die Rohrkörper 2 werden durch einen Manipulator dem Magazin M3 entnommen und über die Fördereinrichtung 38 in die Bearbeitungsstation 29 überführt, verdeutlicht durch die Pfeile Z3, Z4. Taktgesteuert werden die Rohrkörper 2 in der Bearbeitungsstation 29 positioniert und die mit Klebstoff K versehenen Leichtmetallkörper 5, 6 durch Druckbeaufschlagung über die Druckeinheiten 35 axial verlagert und die Aufnahmen 12 in die freien Enden 3, 4 des Rohrkörpers 2 eingepresst.

Die so gefügte Kraftfahrzeug-Achskomponente 1 wird dann entnommen (Pfeil Z5) und der Weiterverarbeitung bzw. weiteren Verwendung zugeführt.

Vor der Herstellung der Klebeverbindung kann eine Kalibrierung des Innendurchmessers dᵢ der Enden 3, 4 des Rohrkörpers 2 durchgeführt werden.

Die Fügeflächen der Leichtmetallkörper 5, 6 bzw. der Aufnahmen 12 am Leichtmetallkörper 5, 6 können vor dem Klebstoffauftrag einer Oberflächenvorbehandlung unterzogen worden sein. Insbesondere ist hierbei an eine Passivierung gedacht, bei der eine dünne, porenfreie oxidische Deckschicht erzeugt wird.

Beim Ein- bzw. Aufpressvorgang der Enden 3, 4 des Rohrkörpers 2 auf die Aufnahmen 12 der Leichtmetallkörper 5, 6 wird die Fügezone mit Klebstoff K benetzt und hierbei neben der Klebstofftasche 13 auch der Raum 24 zwischen der Fase 22 am freien Ende 16 der Aufnahme 12 und der benachbarten Wand 25 des Rohrkörpers 2 sowie der Raum 26 zwischen der Fase 19, 20 am freien Ende 3, 4 des Rohrkörpers 2 und der benachbarten Wand 27 des Leichtmetallkörpers 5, 6 mit Klebstoff K befüllt. Überschüssiger Klebstoff wird abgestrichen. Je nach Anwendungsfall bzw. Produkt kann der Klebstoff auch am Bauteil verbleiben.

Die Aushärtung des Klebstoffs K erfolgt gegebenenfalls noch in der Bearbeitungsstation 29. Vorzugsweise erfolgt die Aushärtung des Klebstoffs K jedoch außerhalb der Bearbeitungsstation 29, nachdem die Kraftfahrzeug-Achskomponente 1 entnommen ist. Die Aushärtung kann auch im Verlauf einer Oberflächenbeschichtung der Kraftfahrzeug-Achskomponente 1 erfolgen, beispielsweise während einer kathodischen Tauchlackierung.

Es entsteht eine hochstabile, langzeitbeständige Klebeverbindung zwischen den Leichtmetallkörpern 5, 6 und dem Rohrbauteil 2, welche aus verschiedenen Werkstoffen bestehen. Die inneren und äußeren Übergangsbereiche der Fügezone sind durch den Klebstoff K abgedichtet und vor Korrosion geschützt.

### Bezugszeichen:

- 1 -: Koppellenkerachse
- 2 -: Rohrkörper
- 3 -: Ende v. 2
- 4 -: Ende v. 2
- 5 -: Leichtmetallkörper
- 6 -: Leichtmetallkörper
- 7 -: vorderer Längenabschnitt v. 5, 6
- 8 -: Lagerbuchse
- 9 -: hinterer Längenabschnitt v. 5, 6
- 10 -: Radträger
- 11 -: Federbeinabstützung
- 12 -: zylindrische Aufnahme
- 13 -: Klebstofftasche
- 14 -: Nut
- 15 -: Absatz
- 16 -: freies Ende v. 12
- 17 -: Absatz
- 18 -: innenliegendes Ende v. 12
- 19 -: Fase
- 20 -: Fase
- 21 -: Stirnfläche v. 2
- 22 -: Fase
- 23 -: Stirnfläche v. 12
- 24 -: Raum
- 25 -: Wand v. 2
- 26 -: Raum
- 27 -: Wand v. 5, 6
- 28 -: Zwickel
- 29 -: Bearbeitungsstation
- 30 -: Tragsäule
- 31 -: Tragsäule
- 32 -: oberes Ende v. 30, 31
- 33 -: Traverse
- 34 -: Spanneinheit
- 35 -: Druckeinheit
- 36 -: Klebstoffauftragsvorrichtung
- 37 -: Düse
- 38 -: Fördereinrichtung
- 39 -: Roboter
- b -: Breite der Stirnfläche
- dᵢ -: Innendurchmesser v. 2
- dk -: Tiefe der Klebstofftasche
- H -: Achse
- K -: Klebstoff
- M1 -: Magazin
- M2 -: Magazin
- M3 -: Magazin
- y -: axiale Länge der Klebstofftasche
- α -: Winkel
- β -: Winkel
- P1 -: Pfeile
- P2 -: Pfeile
- P3 -: Pfeile
- P4 -: Pfeile
- Z1 -: Pfeil
- Z2 -: Pfeil
- Z3 -: Pfeil
- Z4 -: Pfeil
- Z5 -: Pfeil

## Patentansprüche

1. Kraftfahrzeug-Achskomponente, welche einen Leichtmetallkörper (5, 6) und einen Rohrkörper (2) umfasst, die miteinander klebetechnisch verbunden sind, wobei zwischen einem Ende (3, 4) des Rohrkörpers (2) und einer zylindrischen Aufnahme (12) des Leichtmetallkörpers (5, 6) eine Klebstofftasche (13) ausgebildet ist, die mit Klebstoff (K) befüllt ist, **dadurch gekennzeichnet, dass** an einem freien Ende (16) der Aufnahme (12) eine Fase (22) vorgesehen ist und der Raum (24) zwischen der Fase (22) und einer benachbarten Wand (25) des Rohrkörpers (2) mit Klebstoff (K) befüllt ist sowie am freien Ende (3, 4) des Rohrkörpers (2) eine Fase (19, 20) vorgesehen ist und der Raum (26) zwischen der Fase (19, 20) und einer benachbarten Wand (27) des Leichtmetallkörpers (5, 6) mit Klebstoff (K) befüllt ist.

2. Kraftfahrzeug-Achskomponente nach Anspruch 1, **dadurch gekennzeichnet, dass** die Fase (20) am freien Ende (3, 4) des Rohrkörpers (2) am Innenumfang des Rohrkörpers (2) vorgesehen ist.

3. Kraftfahrzeug-Achskomponente nach Anspruch 1 oder 2, **dadurch gekennzeichnet, dass** die Fase (19) am freien Ende (3, 4) des Rohrkörpers (2) am Außenumfang des Rohrkörpers (2) vorgesehen ist.

4. Kraftfahrzeug-Achskomponente nach einem der Ansprüche 1 bis 3, **dadurch gekennzeichnet, dass** die Fase (22) am freien Ende (16) der Aufnahme (12) am Außenumfang der Aufnahme (12) vorgesehen ist.

5. Kraftfahrzeug-Achskomponente nach einem der Ansprüche 1 bis 4, **dadurch gekennzeichnet, dass** die Fase am freien Ende der Aufnahme am Innenumfang der Aufnahme vorgesehen ist.

6. Kraftfahrzeug-Achskomponente nach einem der Ansprüche 1 bis 5, **dadurch gekennzeichnet, dass** die Fase (19, 20) am freien **Ende** (3, 4) des Rohrkörpers (2) zur Stirnfläche (21) des Rohrkörpers (2) in einem Winkel (α) zwischen 30° und 60° verläuft.

7. Kraftfahrzeug-Achskomponente nach einem der Ansprüche 1 bis 6, **dadurch gekennzeichnet, dass** die Fase (22) am freien Ende (16) der Aufnahme (12) zur Stirnfläche (23) der Aufnahme (12) in einem Winkel (β) zwischen 20° und 60° verläuft.

8. Kraftfahrzeug-Achskomponente nach einem der Ansprüche 1 bis 7, **dadurch gekennzeichnet, dass** die Klebstofftasche (13) durch eine Ringnut (14) in der Aufnahme (12) gebildet ist.

9. Kraftfahrzeug-Achskomponente nach einem der Ansprüche 1 bis 8, **dadurch gekennzeichnet, dass** der Rohrkörper (2) aus Stahl besteht.

10. Kraftfahrzeug-Achskomponente nach einem der Ansprüche 1 bis 8, **dadurch gekennzeichnet, dass** der Rohrkörper (2) faserverstärkt ist und insbesondere aus faserverstärktem Kunststoff besteht.

11. Kraftfahrzeug-Achskomponente nach einem der Ansprüche 1 bis 10, **dadurch gekennzeichnet, dass** der Leichtmetallkörper (5, 6) aus Aluminium oder einer Aluminiumlegierung besteht.

12. Kraftfahrzeug-Achskomponente nach einem der Ansprüche 1 bis 10, **dadurch gekennzeichnet, dass** der Leichtmetallkörper (5, 6) aus Magnesium oder einer Magnesiumlegierung besteht.

13. Kraftfahrzeug-Achskomponente nach einem der Ansprüche 1 bis 12, **dadurch gekennzeichnet, dass** die Fügeflächen am Leichtmetallkörper (5, 6) passiviert sind.

14. Verfahren zur Herstellung einer Kraftfahrzeug-Achskomponente (1) umfassend die folgenden Schritte:
- Bereitstellen eines Rohrkörpers (2) und Herstellen einer Fase (19, 20) an einem freien Ende (3, 4) des Rohrkörpers (2);
- Bereitstellen eines Leichtmetallkörpers (5, 6) mit einer zylindrischen Aufnahme (12) und Herstellen einer Fase (22) an einem freien Ende (16) der Aufnahme (12);
- Aufnehmen des Leichtmetallkörpers (5, 6) in einer Bearbeitungsstation (29);
- Zuführen des Rohrkörpers (2) in die Bearbeitungsstation (29);
- Applizieren von Klebstoff (K) auf die Aufnahme (12) und/oder das Ende (3, 4) des Rohrkörpers (2);
- Zusammenführen der Aufnahme (12) und des Endes (3, 4) des Rohrkörpers (2) in der Bearbeitungsstation (29);
- Entnahme der Kraftfahrzeug-Achskomponente (1) aus der Bearbeitungsstation (29).

15. Verfahren nach Anspruch 14, wobei zumindest die Fügeflächen des Leichtmetallkörpers (5, 6) vor dem Klebstoffauftrag einer Oberflächenvorbehandlung unterzogen werden.

16. Verfahren nach Anspruch 14 oder 15, wobei vor dem Zusammenführen der Aufnahme (12) und des Endes (3, 4) des Rohrkörpers (2) eine Kalibrierung des Innendurchmessers (dᵢ) des Endes (3, 4) des Rohrkörpers (2) durchgeführt wird.

17. Verfahren nach einem der Ansprüche 14 bis 16, wobei der Leichtmetallkörper (5, 6) beim Applizieren des Klebstoffs (K) rotierend bewegt wird.

18. Verfahren nach einem der Ansprüche 14 bis 17, wobei ein Klebstoffüberschuss nach dem Zusammenführen der Aufnahme (12) und des Endes (3, 4) des Rohrkörpers (2) entfernt wird.

19. Verfahren nach einem der Ansprüche 14 bis 18, wobei der Klebstoff (K) vor der Entnahme der Kraftfahrzeug-Achskomponente (1) aus der Bearbeitungsstation (29) ausgehärtet wird.

20. Verfahren nach einem der Ansprüche 14 bis 18, wobei der Klebstoff (K) nach der Entnahme der Kraftfahrzeug-Achskomponente (1) aus der Bearbeitungsstation (29) ausgehärtet wird.

21. Verfahren nach einem der Ansprüche 14 bis 20, wobei die Kraftfahrzeug-Achskomponente (1) mit einer Oberflächenbeschichtung, insbesondere einer kathodischen Tauchlackierung (KTL), versehen wird.

22. Verfahren nach Anspruch 21, wobei der Klebstoff (K) während des Oberflächenbeschichtungsvorgangs ausgehärtet wird.

## Claims

1. Motor vehicle axle component which comprises a light metal body (5, 6) and a pipe body (2) which are connected technically with adhesive, wherein between one end (3, 4) of the pipe body (2) and a cylindrical seat (12) of the light metal body (5, 6) an adhesive pocket (13) is formed which is filled with adhesive (K), **characterised in that** on one free end (16) of the seat (12) a bevel (22) is provided and the space (24) between the bevel (22) and an adjacent wall (25) of the pipe body (2) is filled with adhesive (K) and on a free end (3, 4) of the pipe body (2) a bevel (19, 20) is provided and the space (26) between the bevel (19, 20) and an adjacent wall (27) of the light metal body (5, 6) is filled with adhesive (K).

2. Vehicle axle component according to claim 1, **characterised in that** the bevel (20) on the free end (3, 4) of the pipe body (2) is provided on the internal circumference of the pipe body (2).

3. Vehicle axle component according to claim 1 or 2, **characterised in that** the bevel (19) on the free end (3, 4) of the pipe body (2) is provided on the external circumference of the pipe body (2).

4. Vehicle axle component according to one of claims 1 to 3, **characterised in that** the bevel (22) on the free end (16) of the seat (12) is provided on the external circumference of the seat (12).

5. Vehicle axle component according to one of claims 1 to 4, **characterised in that** the bevel on the free end of the seat is provided on the internal circumference of the seat.

6. Vehicle axle component according to one of claims 1 to 5, **characterised in that** the bevel (19, 20) on the free end (3, 4) of the pipe body (2) runs at an angle (a) of between 30° and 60° to the end face (21) of the pipe body (2).

7. Vehicle axle component according to one of claims 1 to 6, **characterised in that** the bevel (22) on the free end (16) of the seat (12) runs at an angle (β) of between 20° and 60° to the end face (23) of the seat (2).

8. Vehicle axle component according to one of claims 1 to 7, **characterised in that** the adhesive pocket (13) is formed by an annular groove (14) in the seat (12).

9. Vehicle axle component according to one of claims 1 to 8, **characterised in that** the pipe body (2) is made of steel.

10. Vehicle axle component according to one of claims 1 to 8, **characterised in that** the pipe body (2) is fibre-reinforced and in particular is made of fibre-reinforced plastic.

11. Vehicle axle component according to one of claims 1 to 10, **characterised in that** the light metal body (5, 6) is made of aluminium or an aluminium alloy.

12. Vehicle axle component according to one of claims 1 to 10, **characterised in that** the light metal body (5, 6) is made of magnesium or a magnesium alloy.

13. Vehicle axle component according to one of claims 1 to 12, **characterised in that** the contact surfaces on the light metal body (5, 6) are passivated.

14. Process for the manufacture of a vehicle axle component (1) comprising the following steps:
- provision of a pipe body (2) and manufacture of a bevel (19, 20) on one free end (3, 4) of the pipe body (2);
- provision of a light metal body (5, 6) with a cylindrical seat (12) and manufacture of a bevel (2) on one free end (16) of the seat (12);
- insertion of the light metal body (5, 6) in a machining station (29);
- introduction of the pipe body (2) in the machining station (29);
- application of adhesive (K) on the seat (12) and / or the end (3, 4) of the pipe body (2);
- bringing together of the seat (12) and the end (3, 4) of the pipe body (2) in the machining station (29);
- removal of the vehicle axle component (1) from the machining station (29).

15. Process according to claim 14, wherein at least the contact surfaces of the light metal body (5, 6) undergoes a surface pre-treatment before the application of the adhesive.

16. Process according to claim 14 or 15, wherein, before the seat (12) and the end (3, 4) of the pipe body (2) are brought together, a calibration of the internal diameter (di) of the end (3, 4) of the pipe body (2) is carried out.

17. Process according to one of claims 14 to 16, wherein the light metal body (5, 6) is moved in a rotating manner when the adhesive (K) is applied.

18. Process according to one of claims 14 to 17, wherein an excess of adhesive is removed after the seat (12) and the end (3, 4) of the pipe body (2) are brought together.

19. Process according to one of claims 14 to 18, wherein the adhesive (K) is hardened before the vehicle axle component (1) is removed from the machining station (29).

20. Process according to one of claims 14 to 18, wherein the adhesive (K) is hardened after the vehicle axle component (1) is removed from the machining station (29).

21. Process according to one of claims 14 to 20, wherein the vehicle axle component (1) is given a surface coating, in particular a cathodic dip coating (KTL).

22. Process according to claim 21, wherein the adhesive (K) is hardened during the surface-coating process.

## Revendications

1. Composant d'essieu pour véhicule automobile, qui comporte un corps en métal léger (5, 6) et un corps tubulaire (2), qui sont reliés l'un à l'autre par collage, dans lequel est réalisée, entre une extrémité (3, 4) du corps tubulaire (2) et un logement (12) cylindrique du corps en métal léger (5, 6), une poche adhésive (13) qui est remplie de colle (K), **caractérisé en ce qu'**est prévu un chanfrein (22) au niveau d'une extrémité (16) libre du logement (12), et **en ce que** l'espace (24) entre le chanfrein (22) et une paroi adjacente (25) du corps tubulaire (2) est rempli de colle (K), et **en ce qu'**est prévu également au niveau de l'extrémité libre (3, 4) du corps tubulaire (2) un chanfrein (19, 20) et **en ce que** l'espace (26) entre le chanfrein (19, 20) et une paroi adjacente (27) du corps en métal léger (5, 6) est rempli de colle (K).

2. Composant d'essieu pour véhicule automobile selon la revendication 1, **caractérisé en ce que** le chanfrein (20) au niveau de l'extrémité libre (3, 4) du corps tubulaire (2) est prévu au niveau de la périphérie intérieure du corps tubulaire (2).

3. Composant d'essieu pour véhicule automobile selon la revendication 1 ou 2, **caractérisé en ce que** le chanfrein (19) au niveau de l'extrémité libre (3, 4) du corps tubulaire (2) est prévu au niveau de la périphérie extérieure du corps tubulaire (2).

4. Composant d'essieu pour véhicule automobile selon l'une quelconque des revendications 1 à 3, **caractérisé en ce que** le chanfrein (22) au niveau de l'extrémité libre (16) du logement (12) est prévu au niveau de la périphérie extérieure du logement (12).

5. Composant d'essieu pour véhicule automobile selon l'une quelconque des revendications 1 à 4, **caractérisé en ce que** le chanfrein au niveau de l'extrémité libre du logement est prévu au niveau de la périphérie intérieure du logement.

6. Composant d'essieu pour véhicule automobile selon l'une quelconque des revendications 1 à 5, **caractérisé en ce que** le chanfrein (19, 20) au niveau de l'extrémité libre (3, 4) du corps tubulaire (2) forme par rapport à la surface frontale (21) du corps tubulaire (2) un angle (α) compris entre 30° et 60°.

7. Composant d'essieu pour véhicule automobile selon l'une quelconque des revendications 1 à 6, **caractérisé en ce que** le chanfrein (22) au niveau de l'extrémité libre (16) du logement (12) forme par rapport à la surface frontale (23) du logement (12) un angle (β) compris entre 20° et 60°.

8. Composant d'essieu pour véhicule automobile selon l'une quelconque des revendications 1 à 7, **caractérisé en ce que** la poche adhésive (13) est formée par une rainure annulaire (14) dans le logement (12).

9. Composant d'essieu pour véhicule automobile selon l'une quelconque des revendications 1 à 8, **caractérisé en ce que** le corps tubulaire (2) est constitué d'acier.

10. Composant d'essieu pour véhicule automobile selon l'une quelconque des revendications 1 à 8, **caractérisé en ce que** le corps tubulaire (2) est renforcé par des fibres, est constitué en particulier d'une matière plastique renforcée par des fibres.

11. Composant d'essieu pour véhicule automobile selon l'une quelconque des revendications 1 à 10, **caractérisé en ce que** le corps en métal léger (5, 6) est constitué d'aluminium ou d'un alliage en aluminium.

12. Composant d'essieu pour véhicule automobile selon l'une quelconque des revendications 1 à 10, **caractérisé en ce que** le corps en métal léger (5, 6) est constitué de magnésium ou d'un alliage de magnésium.

13. Composant d'essieu pour véhicule automobile selon l'une quelconque des revendications 1 à 12, **caractérisé en ce que** les surfaces de contact au niveau du corps en métal léger (5, 6) sont passivées.

14. Procédé de fabrication d'un composant d'essieu pour véhicule automobile (1), comprenant les étapes suivantes consistant à :
- mettre à disposition un corps tubulaire (2) et fabriquer un chanfrein (19, 20) au niveau d'une extrémité libre (3, 4) du corps tubulaire (2) ;
- mettre à disposition un corps en métal léger (5, 6) doté d'un logement (12) cylindrique et fabriquer un chanfrein (22) au niveau d'une extrémité libre (16) du logement (12) ;
- recevoir le corps en métal léger (5, 6) dans une station d'usinage (29) ;
- amener le corps tubulaire (2) dans la station d'usinage (29) ;
- appliquer de la colle (K) sur le logement (12) et/ou l'extrémité (3, 4) du corps tubulaire (2) ;
- rassembler le logement (12) et l'extrémité (3, 4) du corps tubulaire (2) dans la station d'usinage (29) ;
- retirer le composant d'essieu pour véhicule automobile (1) de la station d'usinage (29).

15. Procédé selon la revendication 14, dans lequel au moins les surfaces d'assemblage du corps en métal léger (5, 6) sont soumises avant l'application de colle à un prétraitement de surface.

16. Procédé selon la revendication 14 ou 15, dans lequel avant le regroupement du logement (12) et de l'extrémité (3, 4) du corps tubulaire (2), on effectue un calibrage du diamètre intérieur (d₁) de l'extrémité (3, 4) du corps tubulaire (2).

17. Procédé selon l'une quelconque des revendications 14 à 16, dans lequel le corps en métal léger (5, 6) est déplacé en rotation lors de l'application de la colle (K).

18. Procédé selon l'une quelconque des revendications 14 à 17, dans lequel un excédent de colle est supprimé après que le logement (12) et l'extrémité (3, 4) du corps tubulaire (2) ont été rassemblés.

19. Procédé selon l'une quelconque des revendications 14 à 18, dans lequel la colle (K) est durcie avant le retrait du composant d'essieu pour véhicule automobile (1) hors de la station d'usinage (29).

20. Procédé selon l'une quelconque des revendications 14 à 18, dans lequel la colle (K) est durcie après le retrait du composant d'essieu pour véhicule automobile (1) en dehors de la station d'usinage (29).

21. Procédé selon l'une quelconque des revendications 14 à 20, dans lequel le composant d'essieu pour véhicule automobile (1) est pourvu d'un revêtement superficiel, en particulier d'une peinture par immersion cathodique (KTL).

22. Procédé selon la revendication 21, dans lequel la colle (K) est durcie au cours du processus d'application du revêtement superficiel.
